**Europäisches Patentamt**

**European Patent Office**

**Office européen des brevets**

(19)

(11) Veröffentlichungsnummer : **0 354 223 B1**

(12) # EUROPÄISCHE PATENTSCHRIFT

(45) Veröffentlichungstag der Patentschrift :
**26.02.92 Patentblatt 92/09**

(51) Int. Cl.$^5$ : **E05F 3/20**

(21) Anmeldenummer : **88909987.5**

(22) Anmeldetag : **25.11.88**

(86) Internationale Anmeldenummer :
**PCT/DE88/00729**

(87) Internationale Veröffentlichungsnummer :
**WO 89/05388 15.06.89 Gazette 89/13**

(54) **MÖBELSCHARNIER.**

(30) Priorität : **09.12.87 DE 3741712**

(43) Veröffentlichungstag der Anmeldung :
**14.02.90 Patentblatt 90/07**

(45) Bekanntmachung des Hinweises auf die
Patenterteilung :
**26.02.92 Patentblatt 92/09**

(84) Benannte Vertragsstaaten :
**AT CH DE FR GB IT LI NL SE**

(56) Entgegenhaltungen :
**DE-B- 1 155 030**
**FR-A- 1 280 076**
**FR-A- 2 576 994**
**US-A- 2 437 192**
**US-A- 2 953 810**
**Patent Abstracts of Japan, Band 11, Nr. 205**
**(M-603) (2652) 3. Juli 1987**

(73) Patentinhaber : **PAUL HETTICH GMBH & CO.**
**Vahrenkampstrasse 12-16**
**W-4983 Kirchlengern 1 (DE)**

(72) Erfinder : **BENEKE, Ulrich**
**Ahlerstrasse 19**
**W-4980 Bünde (DE)**
Erfinder : **GROSS, Jürgen**
**Brunnenstrasse 32**
**W-4904 Enger (DE)**
Erfinder : **OEPPING, Wilfried**
**In der Horst 66**
**W-4983 Kirchlengern (DE)**
Erfinder : **SCHNELLE, Manfred**
**Heidkampstrasse 66**
**W-4980 Bünde (DE)**
Erfinder : **SUNDERMEIER, Günter**
**Im Büschenfeld 5**
**W-4980 Bünde (DE)**

(74) Vertreter : **Stracke, Alexander, Dipl.-Ing. et al**
**Jöllenbecker Strasse 164**
**W-4800 Bielefeld 1 (DE)**

EP 0 354 223 B1

## Beschreibung

Die Erfindung bezieht sich auf ein Möbelscharnier mit am Möbelkorpus und an einer Tür oder Klappe festlegbaren Scharnierteilen und mindestens einem gelenkig mit diesen Scharnierteilen verbundenen Hebel, wobei zwischen dem Hebel und einem Scharnierteil eine mit einem inkompressiblen Hydraulikmedium versehene Dämpfeinrichtung angeordnet ist, die eine am Hebel angelenkte Kolbenstange, einen an der Kolbenstange befestigten Kolben und einen an dem Scharnierteil festgelegten, den Kolben aufnehmenden Zylinder aufweist und im bereich des Kolbens Überströmöffnungen bzw. Kanäle für das Hydraulikmedium vorgesehen sind.

Es ist ein Möbelscharnier dieser Art bekannt (US-A-2 437 192), das konstruktiv sehr aufwendig und damit in der Fertigung teuer ist. Die beiden Kammern des Zylinders werden durch eine in einen Metallblock eingebrachte Bohrung gebildet, in der der Kolben gleitbar gelagert ist.

Es ist ferner eine Dämpfvorrichtung bekannt (FR-A-1 280 076), bei dem der die Dämpfflüssigkeit aufnehmende Zylinder an der einen Stirnseite durch einen boden geschlossen ist, während der anderen geöffneten Stirnseite, an der die Kolbenstange herausgeführt wird, eine aus einem elastischen Material gebildete Endkappe zugeordnet ist.

Der erfindung liegt die Aufgabe zugrunde, ein Möbelscharnier der eingangs genannten Art so zu gestalten, daß störende Schließgeransche vermiden werden, die Wirkung von außen aufgegebener, erhöhter Schließ - und Öffnungskräfte gedämpft wird.

Diese Aufgabe wird nach der Erfindung dadurch gelöst, daß der Zylinder einen Ringflansch aufweist, von dem aus sich ein stirnseitig offenes Zylinderteil erstreckt, das mit Verankerungsrippen für einen Befestigungsflansch einer elastisch verformbaren Endkappe versehen ist, die für die Kolbenstange mit einer mittigen Durchstecköffnung ausgerüstet ist und mit dem Kolben und dem Zylinder zwei Kammern bildet und der Ringflansch des Zylinders an der Innenseite eines am Möbelkorpus festlegbaren Scharnierarms anliegt und der den Ringflansch überragende Zylinderteil sich durch eine Bohrung in dem Scharnierarm erstreckt.

Beim erfindungsgemäßen Möbelscharnier ist die Dämpfeinrichtung zwischen Funktionsteilen des Möbelscharniers angeordnet, ohne daß die am Möbelkorpus und an der Tür oder Klappe zu befestigenden Scharnierteile in ihren Abmessungen und/oder in ihrer konstruktiven Linie geändert zu werden brauchen.

Da die Möbelscharniere Massenartikel darstellen, die von der Preisgestaltung her dem erlaubten Aufwand Grenzen setzen, muß auch die Dämpfeinrichtung preisgünstig herstellbar und montierbar sein. Die Dämpfeinrichtung muß sowohl den Normalbelastungsfall beherrschen, bei dem die Tür, die Klappe o.dgl. mit der relativ kleinen Kraft der Schließfeder des Möbelscharniers geschlossen wird, als auch den Ausnahmefall, bei dem die Tür o.dgl. durch äußere Einflüsse, evtl. durch das Zudrücken oder Öffnen der Tür von Hand, also mit einer erhöhten Kraft und Geschwindigkeit betätigt wird.

Bei einer vorteilhaften Ausführungsform des erfindungsgemäßen Möbelscharniers, bei der die an dem Zylinder verankerte Endkappe als elastisch verformbarer balg ausgebildet ist, der einen Durchsteckkanal für die Kolbenstange aufweist, ist ein den Durchsteckkanal bildender Stutzen mit einem nach innen vorspringenden Wulstring vorgesehen, der in eine Ringnut der Kolbenstange eingreift.

Aufgrund der Materialelastizität der balgförmigen Endkappe und des genannten, nach innen vorspringenden Wulstrings ergibt sich im Bereich des Durchsteckkanals eine kraft- und formschlüssige Verbindung zwischen der Endkappe und der Kolbenstange. Aufgrund dieser Verbindung wird im Betrieb der Dämpfeinrichtung eine gleitende Reibung zwischen der Kolbenstange und der Endkappe vermieden. Ferner wird beim Schließhub des Scharniers die Endkappe in Richtung auf den Zylinder deformiert.

Vor der Einleitung der Öffnungsbewegung der Tür bzw. des Möbelscharniers befindet sich die Dämpfflüssigkeit in der Kammer, die durch die balgförmige Endkappe und durch den Kolben begrenzt wird. Sofern die Öffnung der Tür von Hand aus sehr schnell durchgeführt wird, wird die Endkappe elastisch verformt, so daß die Kolbenstange dem schnellen Öffnungshub folgen kann. Hierbei wird in der zweiten Zylinderkammer ein Unterdruck gebildet, der eine Dampfblase entstehen läßt und erzwingt, daß die Hydraulikflüssigkeit mit erhöhter Geschwindigkeit aus der ersten Kammer in die zweite strömt, so daß sich die elastische Verformung der Endkappe zurückbilden und der Öffnungshub nahezu ungedämpft durchgeführt werden kann.

Sofern bei der Schließbewegung des Scharniers, die durch die Dämpfeinrichtung gebremst wird, eine Belastungsspitze auftritt, kann durch elastische Verformungen des Zylinders und/oder des Kolbens oder eines Kolbenteils der Strömungsquerschnitt zwischen den beiden Kammern der Dämpfeinrichtung vergrößert werden. Nach dem Wegfall der Belastungsspitze bildet sich diese Vergrößerung des Strömungsquerschnitts zurück.

Weitere Merkmale der Erfindung ergeben sich aus den Unteransprüchen. Vorteilhafte beispielsweise Ausführungsformen der Erfindung sind in den Zeichnungen dargestellt und werden im folgenden beschrieben. Es zeigen:

Fig. 1 ein mit einer Dämpfeinrichtung ausgerüstetes Möbelscharnier in der Verschlußstellung,

Fig. 2 das Möbelscharnier nach der Fig. 1 in der Öffnungsstellung,

2

Fig. 3 in perspektivischer Darstellung und im Schnitt eine Ausführungsform einer Dämpfeinrichtung,

Fig. 4 eine Ansicht in Richtung des Pfeiles IV in Fig. 3,

Fig. 5 die Dämpfeinrichtung nach der Fig. 3 während der Öffnungsbewegung,

Fig. 6 die Dämpfeinrichtung nach den Fig. 3 bis 5 im Vertikalschnitt, und zwar auf der linken Seite in der Verschlußstellung und auf der rechten Seite in der Öffnungsstellung des Möbelscharniers,

Fig. 7 eine Teilansicht einer Dämpfeinrichtung, die eine konstruktive Abwandlung gegenüber der Ausführung nach den Fig. 3 bis 6 zum Gegenstand hat, und

Fig. 8 ein weiteres Ausführungsbeispiel einer Dämpfeinrichtung im Schnitt und perspektivisch dargestellt.

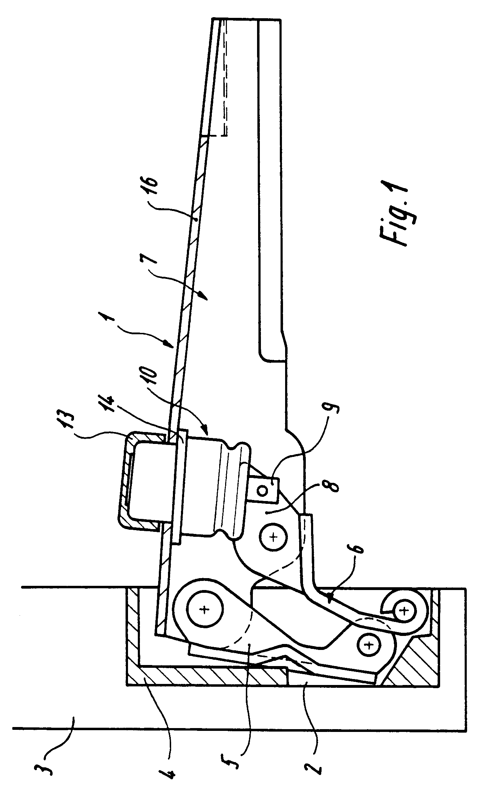

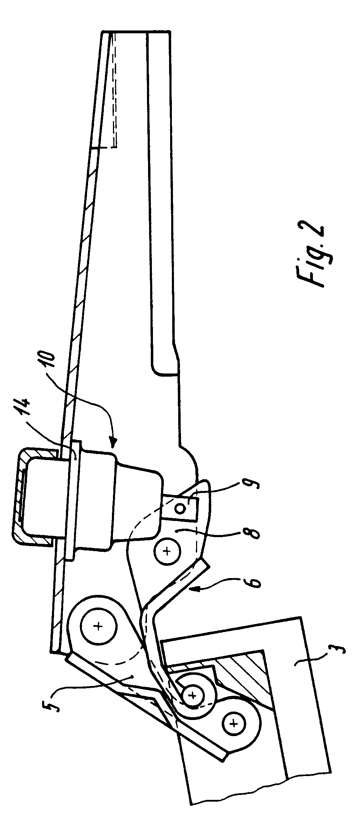

Das Möbelscharnier 1 nach den Fig. 1 und 2 weist ein in einer Aussparung 2 einer Möbeltür 3 angeordnetes und festgelegtes topfartiges Gehäuse 4 auf, das über Hebel 5 und 6 gelenkig mit einem Scharnierarm 7 verbunden ist, der am Möbelkorpus befestigt wird.

Der Hebel 6 ist als zweiarmiger Hebel ausgebildet und weist einen Hebelarm 8 auf, mit dem eine Kolbenstange 9 einer Dämpfeinrichtung 10 gelenkig verbunden ist. Diese Kolbenstange erstreckt sich in ein Gehäuse der Dämpfeinrichtung, das durch eine aus elastischem Material gefertigte, balgförmige Abdeckkappe 11, durch einen Zylinder 12 und durch eine topfförmige, auf den Zylinder gestülpte Kappe 13 gebildet wird.

Der Zylinder ist mit einem Ringflansch 14 ausgerüstet und erstreckt sich durch eine Bohrung 15 einer Wand 16 des Scharnierarms 7. Der Ringflansch 14 liegt an der Innenseite der Wand 16 des Scharnierarms 7 an, während sich die Kappe 13 bis in die Nähe des Scharnierarms erstreckt.

Aus den Fig. 1 und 2 ergibt sich, daß die Dämpfeinrichtung 10 in die Konstruktion des Möbelscharniers integriert ist und keine wesentliche Umgestaltung der Funktionsteile dieses Scharniers erforderlich macht.

Der Zylinder 12 weist ein vom Ringflansch 14 sich erstreckendes, stirnseitig offenes Zylinderteil 17 auf, das an seinem Außenumfang mit Verankerungsrippen 18,19 ausgerüstet ist, an denen ein Befestigungsflansch 20 der Abdeckkappe 11 festgelegt wird.

Die Abdeckkappe ist mit einem nach innen sich erstreckenden Stutzen 21 ausgerüstet, der einen Durchsteckkanal für die Kolbenstange 9 bildet.

Der Stutzen 21 ist im mittleren Bereich mit einem nach innen vorspringenden Wulstring 22 ausgestattet, der in eine Ringnut 23 der Kolbenstange 9 eingreift.

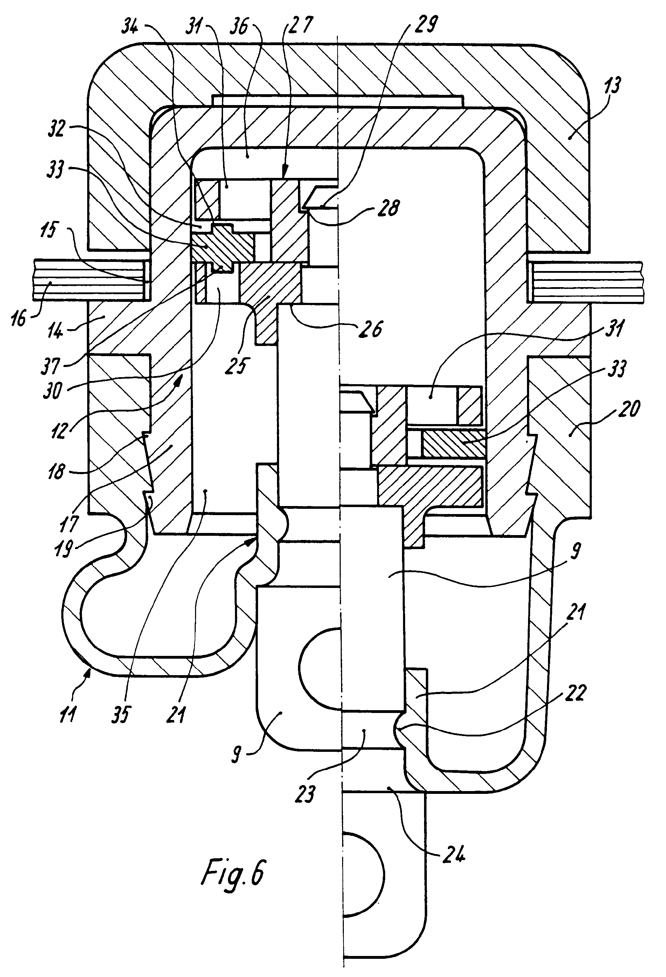

Bei dem Ausführungsbeispiel nach der Fig. 6 legt sich das äußere Ende des Stutzens 21 an eine Schulter 24 der Kolbenstange 9.

Die Endkappe 11 ist zwischen dem Befestigungsflansch 20 und dem Stutzen 21 balgförmig ausgebildet. Sie ist aus einem elastischen, deformierbaren Material, z.B. aus Gummi oder aus gummiähnlichem Kunststoff, gefertigt. Sie kann sich aufgrund einer erhöhten Druckbelastung durch die Dämpfflüssigkeit elastisch verformen und aufgrund ihrer Flexibität der Bewegung der Kolbenstange zwischen der Schließ- und der Öffnungsstellung des Möbelscharniers folgen.

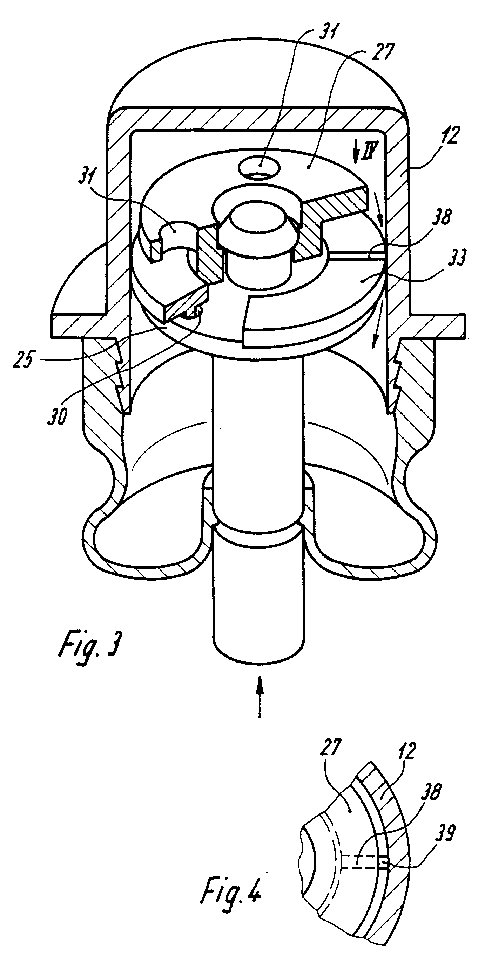

Bei dem Ausführungsbeispiel der Dämpfeinrichtung 10 nach den Fig. 3 bis 6 ist am freien Ende der Kolbenstange 9 ein Kolben 25 vorgesehen, der sich an einer Schulterfläche 26 der Kolbenstange abstützt und durch einen auf die Kolbenstange schnäppbaren Sicherungsring 27 festgelegt wird. Der Sicherungsring 27 hintergreift mit einer Rastkante 28 eine Widerlagerfläche 29 der Kolbenstange.

Sowohl der Außendurchmesser des Kolbens 25 als auch der des Sicherungsringes 27 ist kleiner als der Innendurchmesser des Zylinders 12.

Im Kolben 25 und im Sicherungsring 27 sind Durchströmkanäle 30,31 angeordnet.

Der Kolben 25 und der Sicherungsring 27 bilden eine Aufnahmenut 32 für einen Kolbenring 33, der in dieser Aufnahmenut axial bewegbar ist.

An der dem Sicherungsring 27 zugewandten Seite ist der Kolbenring 33 mit einem Distanznocken 34 ausgerüstet, der sich beim Öffnungshub des Kolbens an der Unterseite des Sicherungsringes 27 abstützt und eine Strömungsverbindung zwischen der Kammer 35 und der Kammer 36 des Zylinders sicherstellt. In dieser Betriebslage gibt der Kolbenring 33 den Durchströmkanal bzw. die Durchströmkanäle 30 in dem Kolben frei.

An der dem Kolben zugewandten Seite weist der Kolbenring einen Nocken 37 auf, der in einen Durchströmkanal 30 des Kolbens 25 eingreift und eine Verdrehsicherung des Kolbenringes gegenüber dem Kolben bildet.

Der Außendurchmesser des Kolbenrings 33 entspricht dem Innendurchmesser des Zylinders 12.

Der Kolbenring ist mit einem Schlitz 38 ausgerüstet, der sich über die gesamte Ringbreite erstreckt. Aus der Fig. 4 kann entnommen werden, daß im Bereich des Schlitzes 38 kein Durchströmkanal 31 im Sicherungsring 27 vorgesehen ist und auch kein Durchströmkanal 30 im Kolben 25, so daß auch bei einer weitgehenden Abdeckung des Schlitzes 38 durch den Sicherungsring 27 oder durch den Kolben 25 ein Teilbereich des Schlitzes als Durchströmquerschnitt verbleibt, dem in der Fig. 4 das Bezugszeichen 39 zugeordnet wurde.

Um sicherzustellen, daß die Durchströmöffnung 39 des Schlitzes 38 freibleibt, d.h. in keiner Arbeitsphase etwa durch seitliches Spiel vom Kolben 25 verdreht wird, kann der Kolben 25 an seinem Umfang mit Führungsnocken, Aussparungen und/oder Abflachungen versehen sein, die so angeordnet sind, daß sie zumindest im Bereich der Durchströmöffnung 39 zwischen Kolbenumfangsfläche und Zylinderwandung einen Freiraum schaffen.

Aus den Fig. 3 und 6 ergibt sich, daß bei dem in die Schließstellung (odere Endstellung) sich bewegende Kolben die durchströmkanäle 30 durch den Kolbenring 33 verschlossen sind, so daß als einziger Strömungsquerschnitt der Teilbereich 39 des Kolbenringes 33 verbleibt.

Ergibt sich nun durch von außen an der Tür angreifende Kräfte ein erhöhter Druck der Dämpfflüssigkeit in der Kammer 36, so kann der Strömungsquerschnitt dadurch vergrößert werden, daß der Zylinder 12 aus einem elastisch verformbaren Material gefertigt wird und somit während dieser Belastungsspitze verformt wird, so daß sich die Zylinderwandung vom Kolbenring 33 abhebt und ein zusätzlicher Durchströmquerschnitt geschaffen wird.

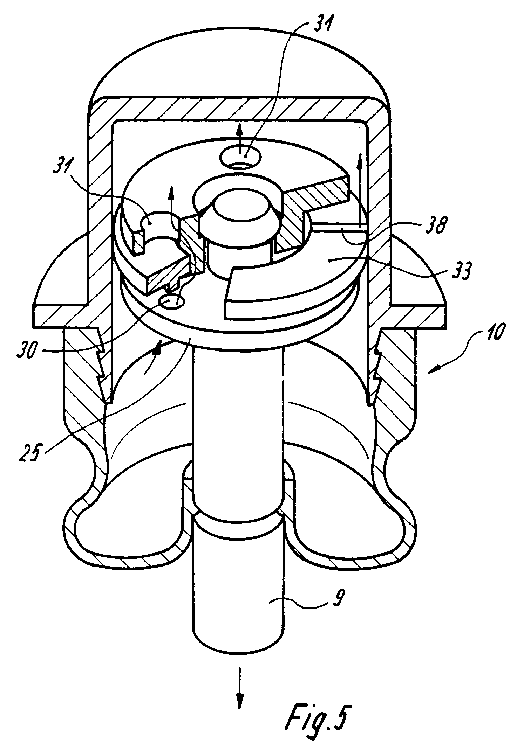

Wird der Kolben aus der Schließstellung in die Öffnungsstellung bewegt, wie dies in der Fig. 5 aufgezeigt ist, so nimmt der Kolbenring 33 in der Aufnahmenut 32 eine durch die Distanznocken 34 bestimmte Mittelstellung ein, so daß die Dämpfflüssigkeit von der Kammer 35 durch die Durchströmkanäle 30 und 31 in die Kammer 36 fließen kann.

Sofern der Zylinder 12 aus einem nicht elastischen Material gefertigt wird, kann man beim Schließhub des Kolbens auftretenden Belastungsspitzen dadurch begegnen, daß man den Kolbenring 33a an der der Kammer 36 zugewandten Seite mit einer Schrägfläche 40 versieht. Diese wird während einer Belastungsspitze mit einem erhöhten Druck aus der Kammer 36 belastet, so daß der Kolbenring im Bereich des Schlitzes 38 zusammengedrückt wird und hierdurch ein zusätzlicher Strömungsquerschnitt zwischen dem Kolbenring und der Innenwandung des Zylinders entsteht.

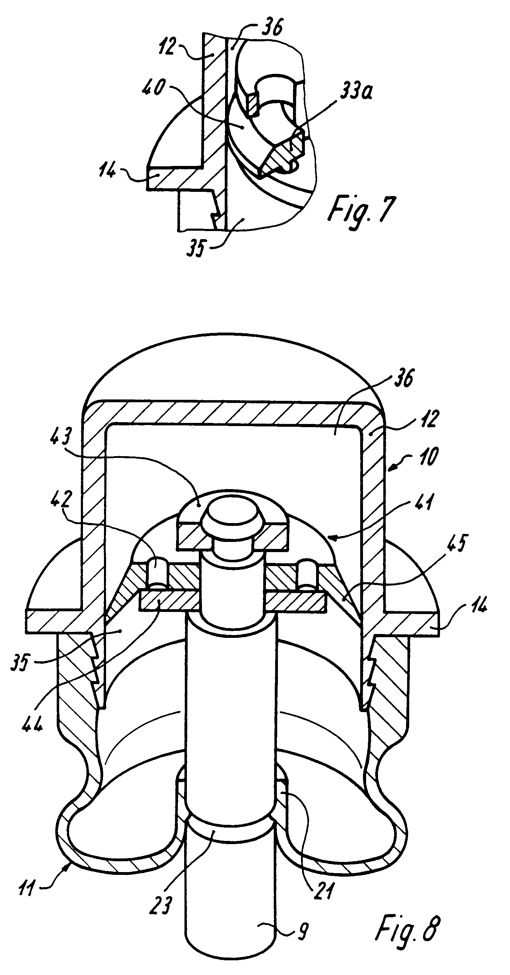

Ein weiteres Ausführungsbeispiel der Dämpfeinrichtung 10 ist in der Fig. 8 dargestellt.

Bei dieser Konstruktion ist der Kolben 41 mit Durchströmkanälen 42 ausgerüstet und am freien Ende der Kolbenstange 9 gleitbar zwischen einem am Kolbenstangenende festgelegten Sicherungsring 43 und einer Abdeckplatte 44 für die Durchströmkanäle 42 gelagert.

Beim Öffnungshub des Kolbens 41 liegt dieser an dem Sicherungsring 43 an, so daß die Dämpfflüssigkeit aus der Kammer 35 durch die Kanäle 42 in die Kammer 36 strömen kann.

Beim Schließhub des Kolbens nimmt der Kolben die Betriebslage ein, die in der Fig. 8 aufgezeigt ist. Die Überströmkanäle 42 werden durch die Abdeckplatte 44 verschlossen, so daß die Dämpfflüssigkeit aus der Kammer 36 in die Kammer 35 erst strömen kann, wenn die umlaufende Dichtlippe 45, die an der Innenwandung des Zylinders anliegt, durch den Flüssigkeitsdruck in der Kammer 36 elastisch nach innen verformt wird, so daß sich ein freier Querschnitt zwischen der Dichtlippe und der Innenwandung des Zylinders ergibt.

Bei dieser Ausführung muß somit der Kolben 41 aus einem elastisch verformbaren Material bestehen. Er wird vorzugsweise aus Gummi oder aus einem gummiähnlichen Kunststoff gefertigt.

Bezugszeichen

| | | | | |
|---|---|---|---|---|
| 1 | Möbelscharnier | 33 | Kolbenring |
| 2 | Aussparung | 33a | Kolbenring |
| 3 | Möbeltür | 34 | Distanznocken |
| 4 | Gehäuse | 35 | Kammer |
| 5 | Hebel | 36 | Kammer |
| 6 | Hebel | 37 | Nocken |
| 7 | Scharnierarm | 38 | Schlitz |
| 8 | Hebelarm | 39 | Durchströmquerschnitt |
| 9 | Kolbenstange | 40 | Schrägfläche |
| 10 | Dämpfeinrichtung | 41 | Kolben |
| 11 | Abdeckkappe | 42 | Durchströmkanal |
| 12 | Zylinder | 43 | Sicherungsring |
| 13 | Kappe | 44 | Abdeckplatte |
| 14 | Ringflansch | 45 | Dichtlippe |
| 15 | Bohrung | | |
| 16 | Wand | | |
| 17 | Zylinderteil | | |
| 18 | Verankerungsrippe | | |
| 19 | Verankerungsrippe | | |
| 20 | Befestigungsflansch | | |
| 21 | Stutzen | | |
| 22 | Wulstring | | |
| 23 | Ringnut | | |
| 24 | Schulter | | |
| 25 | Kolben | | |
| 26 | Schulterfläche | | |
| 27 | Sicherungsring | | |
| 28 | Rastkante | | |
| 29 | Widerlagerfläche | | |
| 30 | Durchströmkanal | | |
| 31 | Durchströmkanal | | |
| 32 | Aufnahmenut | | |

**Patentansprüche**

1. Möbelscharnier mit am Möbelkorpus und an einer Tür oder Klappe festlegbaren Scharnierteilen und mindestens einem gelenkig mit diesen Scharnierteilen verbundenen Hebel (6), wobei zwischen dem Hebel (6) und einem Scharnierteil eine mit einem inkompressiblen Hydraulikmedium versehene Dämpfeinrichtung (10) angeordnet ist, die eine am Hebel (6) angelenkte Kolbenstange (9), einen an der Kolbenstange befestigten Kolben und einen an dem Scharnierteil festgelegten, den Kolben aufnehmenden Zylinder (12) aufweist und im Bereich des Kolbens Überströmöffnungen bzw. Kanäle für das Hydraulikmedium vorgesehen sind, **dadurch gekennzeichnet**, daß der Zylinder (12) einen Ringflansch (14) aufweist, von dem aus sich ein stirnseitig offenes Zylinderteil (17) erstreckt, das mit Verankerungsrippen (18,19) für einen Befestigungsflansch (20) einer elastisch verformbaren Endkappe (11) versehen ist, die für die Kolbenstange (9) mit einer mittigen Durch-Stecköffnung ausgerüstet ist und mit dem Kolben und dem Zylinder zwei Kammern (35, 36) bildet und der Ringflansch (14) des Zylinders (12) an der Innenseite eines am Möbelkorpus festlegbaren Scharnierarms (7) anliegt und der den Ringflansch überragende Zylinderteil sich durch eine Bohrung in dem Scharnierarm erstreckt.

2. Möbelscharnier nach Anspruch 1, dadurch gekennzeichnet, daß ein den Durchsteckkanal bildender Stutzen (21) mit einem nach innen vorspringenden Wulstring (22) versehen ist, der in eine Ringnut (23) der Kolbenstange (9) eingreift.

3. Möbelscharnier nach Anspruch 2, dadurch gekennzeichnet, daß der Wulstring (22) im mittleren Bereich des Stutzens (21) angeordnet ist.

4. Scharnier nach Anspruch 2 oder 3, dadurch gekennzeichnet, daß das äußere Ende des Stutzens (21) an einer Schulter (24) der Kolbenstange (9) anliegt.

5. Möbelscharnier nach Anspruch 1, dadurch gekennzeichnet, daß auf den durch die Bohrung des Scharnierarms (7) sich erstreckenden Zylinder teil eine topfförmige Kappe (13) gestülpt ist, die sich bis in die Nähe des Scharnierarms (7) erstreckt.

6. Möbelscharnier nach Anspruch 1, dadurch gekennzeichnet, daß der Zylinder (12) aus einem unter der Wirkung eines erhöhten Druckes des Hydraulikmediums elastisch verformbaren Material besteht.

7. Möbelscharnier nach Anspruch 1, dadurch gekennzeichnet, daß zusätzlich zu dem Kolben (25) ein Sicherungsring (27) an der Kolbenstange (9) festgelegt ist, der mit dem Kolben (25) eine Aufnahmenut (32) für einen Kolbenring (33) bildet, der in der Aufnahmenut (32) mit axialem Spiel angeordnet ist, wobei der Kolbenring (33) einen Schlitz (38) aufweist, mit seiner Umfangslfäche an der Zylinder innenwand anliegt, der Kolben und der Sicherungsring mit Außendurchmessern ausgerüstet ist, die kleiner sind als der Innendurchmesser des Zylinders und im Kolben (25) und im Sicherungsring (27) Durchströmkanäle (30, 31) vorgesehen sind, von denen die des Kolbens beim Schließhub mit dem Kolbenring abdeckbar sind.

8. Möbelscharnier nach Anspruch 7, dadurch gekennzeichnet, daß der Kolbenring (33) mindestens einen Nocken (37) aufweist, der in einen Durchströmkanal (30) des Kolbens (35) eingreift.

9. Möbelscharnier nach Anspruch 1, dadurch gekennzeichnet, daß der Kolbenring (33) an der dem Sicherungsring (27) zugewandten Seite Distanznocken (34) aufweist, die sich beim Öffnungshub des Kolbens an der Unterseite des Sicherungsringes abstützen.

10. Möbelscharnier nach Anspruch 7, dadurch gekennzeichnet, daß der Kolbenring (33a) an der der Kammer (36) zugewandten Seite mit einer umlaufenden Schrägfläche (40) versehen ist, die vom Flüssigkeitsdruck in der Kammer (36) beaufschlagt wird.

11. Möbelscharnier nach Anspruch 1, dadurch gekennzeichnet, daß der Kolben (41) zwischen einem am Kolbenstangenende festgelegten Sicherungsring (43) und einer Abdeckplatte (44) für im Kolben vorgesehene, axial sich erstreckende Kanäle (42) axialverschiebbar auf der Kolbenstange gelagert ist, und der Kolben eine umlaufende schräg in Richtung auf die Kammer (35) sich erstreckende Dichtlippe (45) aufweist.

## Claims

1. A furniture hinge comprising hinge members which can be fixed to the body of the article of furniture and to a door or flap, and at least one lever (6) which is pivotally connected to said hinge members, wherein arranged between the lever (6) and a hinge member is a damping means (10) provided with an incompressible hydraulic medium and having a piston rod (9) pivotally connected to the lever (6), a piston secured to the piston rod and a cylinder (12) fixed to the hinge member and accommodating the piston, and provided in the region of the piston are flow transfer openings or ducts for the hydraulic medium, characterised in that the cylinder (12) has an annular flange (14) from which extends a cylinder portion (17) which is open at its end and which is provided with anchoring ribs (18, 19) for a fixing flange (20) of an elastically deformable end cap (11) which is provided with a central insertion opening for the piston rod (9) and with the piston and the cylinder forms two chambers (35, 36) and the annular flange (14) of the cylinder (12) bears against the inside of a hinge arm (7) which can be secured to the body of the article of furniture and the cylinder portion which projects beyond the annular flange extends through a bore in the hinge arm.

2. A furniture hinge according to claim 1 characterised in that a connecting portion (21) which forms the insertion passage is provided with an inwardly projecting annular bead (22) which engages into an annular groove (23) in the piston rod (9).

3. A furniture hinge according to claim 2 characterised in that the annular bead (22) is disposed in the central region of the connecting portion (21).

4. A hinge according to claim 2 or claim 3 characterised in that the outer end of the connecting portion (22) bears against a shoulder (24) on the piston rod (9).

5. A furniture hinge according to claim 1 characterised in that a pot-shaped cap (13) is fitted over the cylinder portion which extends through the bore in the hinge arm (7), the cap (13) extending to close to the hinge arm (7).

6. A furniture hinge according to claim 1 characterised in that the cylinder (12) comprises a arterial which is elastically deformable under the effect of an increased pressure of the hydraulic medium.

7. A furniture hinge according to claim 1 characterised in that in addition to the piston (25) a securing ring (27) is fixed to the piston rod (9) and with the piston (25) forms a receiving groove (32) for a piston ring (33) which is arranged with axial play in the receiving groove (32), wherein the piston ring (33) has a slot (38) and bears with its peripheral surface against the inside wall surface of the cylinder, the piston and the securing ring are of outside diameters which are smaller than the inside diameter of the cylinder and provided in the piston (25) and in the securing ring (27) are through-flow passages (30, 31) of which those in the piston can be covered over in the closing stroke movement by the piston ring.

8. A furniture hinge according to claim 7 characterised in that the piston ring (33) has at least one projection (37) which engages into a through-flow passage (30) in the piston (35).

9. A furniture hinge according to claim 7 characterised in that at the side towards the securing ring (27) the piston ring (33) has spacer project ions (34) which in the opening stroke movement of the piston bear against the underside of the securing ring.

10. A furniture hinge according to claim 7 characterised in that at the side towards the chamber (36) the piston ring (33a) is provided with a peripherally extending inclined surface (40) which is acted upon by the fluid pressure in the chamber (36).

11. A furniture hinge according to claim 1 characterised in that the piston (41) is mounted axially displaceably on the piston rod between a securing ring (43) fixed to the end of the piston rod and a cover plate (44) for axially extending passages (42) which are provided in the piston, and the piston has a peripheral sealing lip (45) extending inclinedly towards the chamber (35).


**Revendications**

1. Charnière de meuble comportant des parties de charnière à fixer sur le corps du meuble et sur une porte ou un abattant ainsi qu'au moins un levier (6) relié articulé avec ces parties de charnière, un dispositif d'amortissement (10) recevant un fluide hydraulique incompressible, étant placé entre le levier (6) et une partie de charnière, dispositif d'amortissement qui comporte une tige de piston (9) articulée sur le levier (6), un piston fixé sur la tige de piston et un cylindre (12) fixé sur la partie de charnière, logeant le piston et des orifices d'écoulement ou des conduits étant prévus dans la région du piston pour le fluide hydraulique, caractérisée en ce que le cylindre (12) présente une bride annulaire (14) à partir de laquelle s'étend une partie de cylindre (17) ouverte frontalement, qui est pourvue de nervures d'ancrage (18, 19) pour une bride de fixation (20) d'un embout (11) déformable élastiquement qui est pourvu d'une ouverture centrale de traversée de la tige de piston (9) et forme deux chambres (35, 36) avec le piston et le cylindre et en ce que la bride annulaire (14) du cylindre (12) s'applique contre la face intérieure d'un bras de charnière (7) à fixer sur le corps du meuble et en ce que la partie de cylindre, dépassant de la bride annulaire, traverse un trou pratiqué dans le bras de charnière.

2. Charnière de meuble selon la revendication 1, caractérisée en ce qu'une tubulure (21), formant le canal de traversée, est pourvue d'un bourrelet annulaire (22) faisant saillie vers l'intérieur, qui s'engage dans une rainure annulaire (23) de la tige de piston (9).

3. Charnière de meuble selon la revendication 2, caractérisée en ce que le bourrelet annulaire (22) est situé dans la région centrale de la tubulure (21).

4. Charnière de meuble selon la revendication 2 ou 3, caractérisée en ce que l'extrémité extérieure de la tubulure (21) s'applique contre un épaulement (24) de la tige de piston (9).

5. Charnière de meuble selon la revendication 1, caractérisée en ce qu'un chapeau (13) en forme de pot, qui s'étend jusqu'à proximité du bras de charnière (7), est emboîté sur la partie de cylindre traversant le trou du bras de charnière (7).

6. Charnière de meuble selon la revendication 1, caractérisée en ce que le cylindre (12) est réalisé dans un matériau élastiquement déformable sous l'effet d'une pression accrue du fluide hydraulique.

7. Charnière de meuble selon la revendication 1, caractérisée en ce qu'en plus du piston (25), il est fixé, sur la tige de piston (9), une bague de blocage (27) qui forme avec le piston (25) une rainure de logement (32) pour un segment de piston (33) qui est placé dans la rainure de logement (32), avec un jeu axial, le serpent de piston (33) présentant une fente (38) et s'appliquant par sa surface périphérique contre la paroi intérieure du cylindre, le piston et la bague de blocage présentant des diamètres extérieurs qui sont inférieurs au diamètre intérieur du cylindre, et des canaux d'écoulement (30, 31) étant prévus dans le piston (25) et dans la bague de blocage (27), les canaux du piston pouvant être recouverts pendant la course de fermeture, par le serpent de piston.

8. Charnière de meuble selon la revendication 7, caractérisée en ce que le serpent de piston (33) présente au moins une came (37) qui s'engage dans un canal d'écoulement (30) du piston (25).

9. Charnière de meuble selon la revendication 7, caractérisée en ce que le serpent de piston (33) présente, sur le côté tourné vers la bague de blocage (27), des cames d'écartement (34) qui prennent appui contre la face inférieure de la bague de blocage, pendant la course d'ouverture du piston.

10. Charnière de meuble selon la revendication 7, caractérisée en ce que le segment de piston (33a) est pourvu, sur le côté tourné vers la chambre (36), d'une surface oblique (40) continue qui reçoit la pression de liquide régnant dans la chambre (36).

11. Charnière de meuble selon la revendication 1, caractérisée en ce que le piston (41) est monté coulissant axialement sur la tige de piston, entre une bague de blocage (43) fixée sur l'extrémité de la tige de piston et une plaque de couverture (44) pour des conduits (42) s'étendant axialement dans le piston, et en ce que le piston présente une lèvre d'étanchéité (45) continue, s'étendant obliquement en direction de la chambre (35).

*Fig.1*

*Fig. 2*

Fig. 3

Fig. 4

Fig.5

Fig.6

Fig. 7

Fig. 8